# EUROPEAN PATENT APPLICATION

(11) **EP 1 327 606 A1**
(43) Date of publication of application: **16.07.2003**
(21) Application number: 00963068.2
(22) Date of filing: 02.10.2000
(51) Int. Cl.: C01B 3/00, C22C 14/00, H01M 8/04, F17C 11/00

(54) **METHOD OF ABSORPTION-DESORPTION OF HYDROGEN STORAGE ALLOY AND HYDROGEN STORAGE ALLOY AND FUEL CELL USING SAID METHOD**

(71) Applicant: Tohoku Techno Arch Co., Ltd., Sendai-shi, Miyagi 980-0845 (JP); Okada, Masuo, Sendai-shi, Miyagi 982-0807 (JP)
(72) Inventor: OKADA, Masuo, Sendai-shi, Miyagi 982-0807 (JP); KURIIWA, Takahiro, Utsunomiya-shi, Tochigi 321-0942 (JP); YAMASHITA, Shinichi, Narita-shi, Chiba 286-0011 (JP)
(74) Representative: Weber, Dieter, Dr.
(86) International application number: JP0006869
(87) International publication number: WO02028767

(57) **Abstract**

According to the invention, hydrogen absorbed in a PCT curve low pressure region not desorbed and utilized so far can be desorbed easily by controlling a hydrogen storage alloy temperature in the final stage of a hydrogen desorption process (T2) to a temperature higher than the hydrogen storage alloy temperature in the hydrogen absorption process (T0) and a hydrogen storage alloy temperature in the initial stage of the hydrogen desorption process (T1) (T2 > T1 ≧ T0).

## Description

### Technical Field

The present invention concerns a hydrogen absorption and desorption method of repeating pressurization and depressurization of hydrogen to a hydrogen storage alloy. More specifically, the present invention relates to a body-centered cubic hydrogen storage alloy having two-stage plateau characteristics or inclined plateau characteristics. Particularly, the present invention relates to a hydrogen absorption and desorption method of increasing the amount of desorbed hydrogen within a practical pressure range and temperature range, a hydrogen storage alloy suitable to the absorption and desorption method, as well as a fuel cell using the hydrogen absorption and desorption method described above.

### Background Art

At present, along with increase in the amount of use of fossil fuels such as petroleum, there are fears of acid rains caused by NOx (nitrogen oxides) and also global warming due to increasing CO₂. Since such environmental disruption gives severe problems, intense attention has been attracted to the development and practical use of various clean energies gentle to the earth. One of new energy development is a practical use of hydrogen energy. Hydrogen is a constituent element of water present infinitely on the earth which can be formed by using various primary energies, as well as it can be used as a fluid energy instead of existent petroleum with no worry of environmental disruption since combustion products of hydrogen consists only of water. Further, different from electric power, it has excellent characteristics such as relatively easy storage thereof.

Accordingly, studies on hydrogen storage alloys as storage and transportation media of hydrogen have been made vigorously in recent years, and practical use therefor has been expected. The hydrogen storage alloys are metals and alloys capable of absorbing and desorbing hydrogen under appropriate conditions. By the use of the alloys, hydrogen can be stored at a lower pressure and at a higher density compared with existent hydrogen reservoirs and the volumic density thereof is substantially equal with or higher than liquid hydrogen or solid hydrogen.

For the hydrogen storage alloys, body-centered cubic structures such as V, Nb, Ta, or CrTiMn system and CrTiV system (hereinafter referred to as "BCC") have been mainly studied as proposed, for example, in Japanese Patent Laid-Open Hei 10-110225. It has been known that such alloys absorb more hydrogen compared with AB5 type alloys such as LaNi₅ or AB2 type alloys such as TiMn₂ put to practical use at present. This is because the BCC type alloys have a lot of hydrogen absorbing sites and H/M is as high as about 2 (H: absorbed hydrogen atoms, M: alloy constituent elements. About 4.0 wt% in V having an atom weight of about 50).

It has been known that the BCC type alloys having relatively large hydrogen absorbing amount take place two-step reactions in the course of hydrogen absorption to form hydrides as shown by Reilly and R. H. Wiswall, in Inorg. Chem. 9 (1970), 1678. For example, V reacts with hydrogen at an ambient temperature and forms two kinds of hydrides depending on the pressure of hydrogen. At first, in the initial stage of the reaction where the hydrogen pressure is at a low pressure, an extremely stable hydride is formed as V → VH_{0.8} (α phase → β phase) (hereinafter referred to as "low pressure plateau area"), and the reverse reaction is scarcely taken plate near the room temperature. When the hydrogen pressure is further applied, it forms a hydride as: VH_{0.8} → VH_{2.01} (β phase → γ phase: referred to as high pressure plateau area). Since the equilibrium pressure of hydrogen in this reaction is at an appropriate pressure of about several atm near the room temperature, the V-containing BCC alloys have been studied vigorously as hydrogen storage alloys of high capacity.

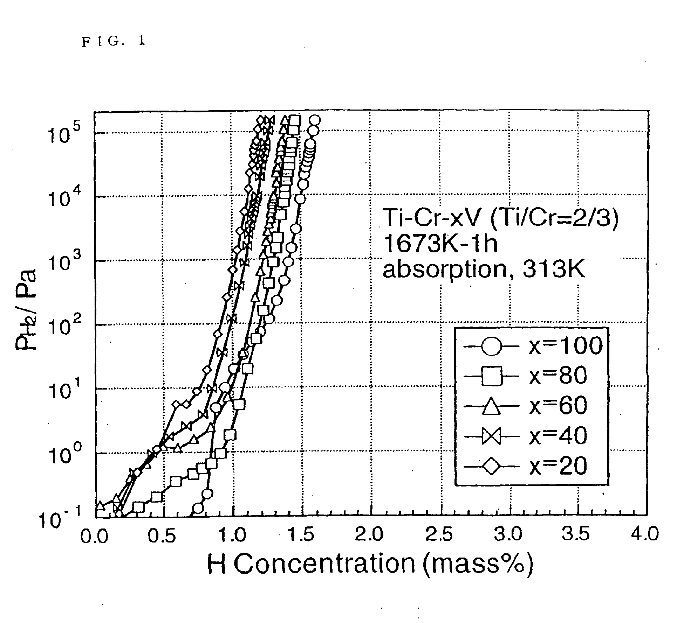

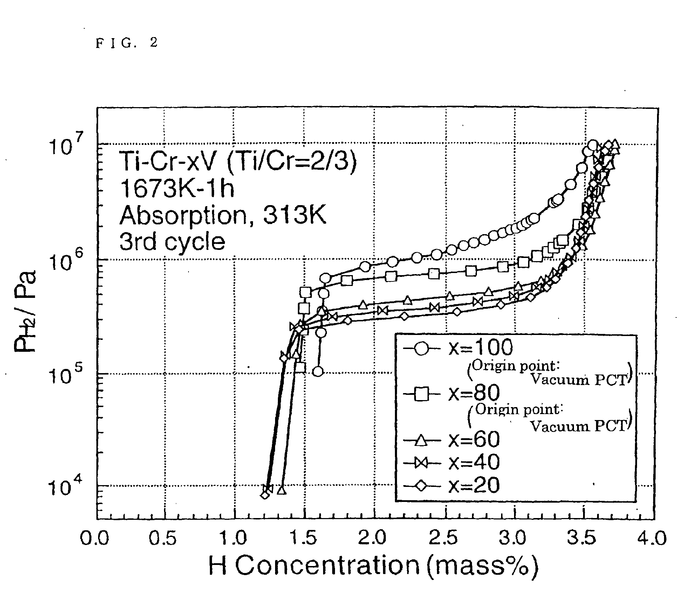

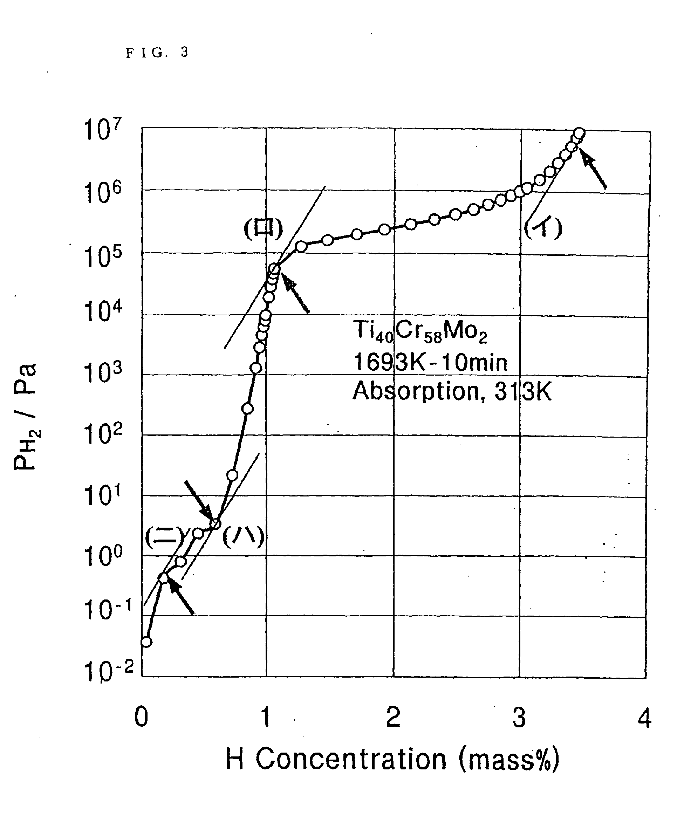

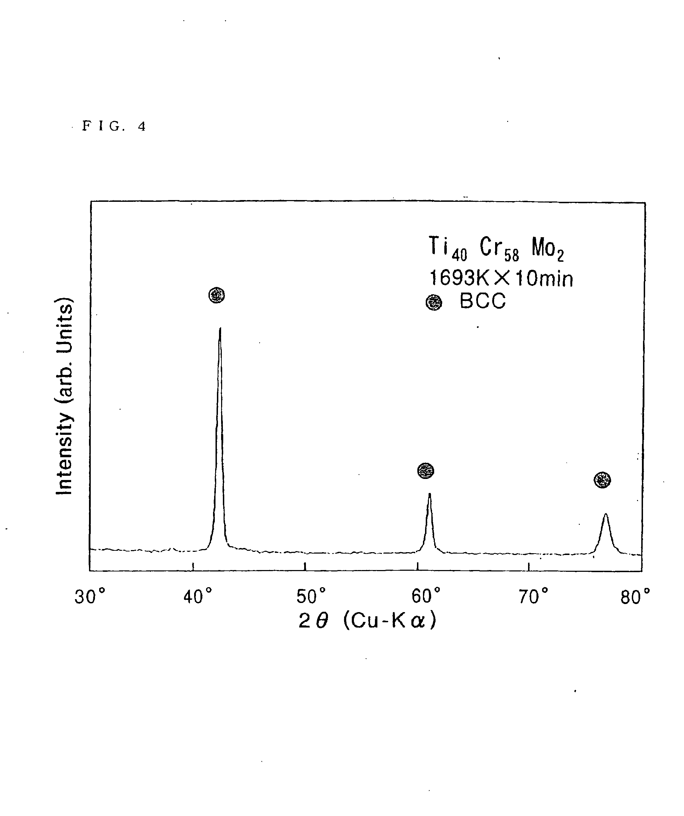

Fig. 1 shows vacuum PCT curves at 313K of a Ti-Cr-xV (Ti/Cr = 2/3, X = 20 - 100) body-centered cubic alloy. The low pressure plateau observed at a hydrogen pressure of 0.1 Pa to 10 Pa in Fig. 1 tends to appear on the side of higher pressure as the addition amount of V is smaller. Fig. 2 shows high pressure PCT curves for the same specimen. A flat area near 10⁶ Pa in Fig. 2 is a high pressure plateau area and the high pressure plateau area shifts to lower pressure side as the addition amount of V is smaller. Further, from Fig. 1 and Fig. 2, it is also confirmed that Ti-Cr-V system alloys show two-stage plateaus. Fig. 3 is a PCT curve for a Ti₄₀Cr₅₈Mo₂ alloy which is plotted for the pressure range from 1 Pa to 10 MPa, and an inclined plateau is observed in a low pressure region. Fig. 4 is an XRD chart for the alloy and it has been confirmed that a BCC mono-phase is formed by quenching from 1420°C in iced water. The inclined area between the inclined plateau area of the low pressure region and the high pressure plateau areas is a region in accordance with the Sievert's law. In addition to V, Nb is also a metal having two-stage plateaus (low pressure phase NbH and high pressure phase NbH2). Further, Ti shows two-stage plateaus transforming as α → β → γ, this being a high temperature operation. Further, FeTi is an intermetallic compound having two-stage plateaus that operates near 40°C. Further, alloys such as (Zr, Ti)V2 alloys show inclined plateaus and such alloys are also used as hydrogen storage alloys. Further, the hydrogen storage alloys showing the two-stage plateau or the inclined plateau have a feature that the PCT characteristic curve is in contact with three or more parallel lines, or a feature of having three or more knick points in the PCT curve within the pressure range from a low pressure of 1 Pa or less to 10 MPa. For example, in the Ti₄₀Cr₅₈Mo₂ alloy shown in Fig. 3, it can be easily confirmed that the PCT curve is in contact with four parallel lines and also has four knick points each shown by an arrow. On the contrary, the PCT characteristic curves of existent AB5 type alloys such as an LaNi₅ alloy are in contact with two parallel lines and have two knick points.

The prior art which is considered to be based on the idea for attaining a hydrogen storage alloy of high capacity by the two-stage plateau and inclined plateau characteristics described above includes the followings; (a) a spinodal curve decomposition structure is developed in a Ti alloy of a body-centered cubic structure (JP-A No. 10-110225), (b) Cu and/or rare earth element is added to Ti-Cr-V system alloys (JP-B No. 4-77061), (c) a molten Ti alloy is quenched to form a BCC mono-phase at a room temperature (JP-A No. 10-158755), and (d) a lattice constant of a BCC alloy comprising Ti-Cr as a main element is controlled (JP-A No. 7-252560).

Among the hydrogen absorption and desorption methods described above, JP-A No. 10-110225 and JP-A No. 7-252560 include descriptions regarding hydrogen absorbing and desorbing temperature. Each of the methods conducts hydrogen absorption and desorption at a constant temperature. In the latter JP-A No. 7-252560, the activating pre-treatment is conducted in two steps, that is, a pre-stage at low temperature and post stage but the absorbing and desorbing temperature is constant (20°C). A method of absorbing hydrogen to a hexagonal system Ti-Cr-V system alloy which is not a BCC alloy and heating at 100°C (column 4, lines 32 - 39) in JP-B No. 59-38293 is also an absorption and desorption method at a constant temperature.

On the other hand, application use utilizing hydrogen described above includes fuel cells. Since the fuel cells have higher power generation efficiency compared with thermal power generation, they have been studied vigorously and remarkable improvement for the power generation efficiency in the feature has been expected. As the fuel for the fuel cell, hydrogen in natural gas or methanol, etc. is utilized. Since the fuel cells using hydrogen as the fuel are simple in the structure and exhibit excellent performance, alkali electrolyte type and solid polymeric film type fuel cells with a power of about 10 kW have been used as energy sources for mobile engines such as satellites, deep-sea vessels, and electric automobiles. Further, application in a general range is expected, for example, as portable fuel cells and power sources for use in portable equipments.

In the hydrogen storage alloy having the two-stage plateau characteristics such as the V-containing BCC alloys described above which have been generally studied as hydrogen storage alloys of high capacity, since the hydrogen absorbing reaction in a low pressure plateau area proceeds only to the side reacting with hydrogen at a room temperature, it was not practiced so far to take out hydrogen absorbed in the low pressure plateau area and use it as effective hydrogen. Generally, it is said that the amount of hydrogen taken out of body-centered cubic hydrogen storage alloys including pure V and pure Nb is extremely small relative to the theoretical amount (New edition, Hydrogen Storage Alloy - Physical Property and Application Use Thereof - written by Yasuaki Osumi, published from Agne Techno Center (new edition, first print, February 5, 1992), pages 340 - 341).

In AB5 type alloys such as LaNi₅ or BCC type alloys put to practical use at present, the equilibrium pressure with hydrogen can be controlled by controlling the alloy ingredients. Further, while the equilibrium pressure of hydrogen storage alloy with hydrogen can be controlled by the operation temperature, the existent development for alloys lacks in the technical idea of effectively utilizing the hydrogen absorbing characteristics in the low pressure area of the PCT characteristic curve. That is, for increasing the capacity of absorbed hydrogen in the BCC type hydrogen storage alloys, while it is considered effective that hydrogen in the reaction between α phase → β phase, that is, in the low pressure area of the PCT characteristics curve (reaction of V → VH_{0.8}, for example, for V), in addition to the β phase region (region between the low pressure plateau area and the high pressure plateau area in accordance with the Sievert's law) of BCC type alloys is concerned with the absorption and desorption reaction, but the method has not yet been disclosed.

Accordingly, the present invention intends to provide a hydrogen absorption and desorption method capable of absorbing and desorbing more hydrogen by effectively utilizing not only the reaction between α phase → β phase but also hydrogen therebetween, that is, in the low pressure region of the PCT curve, for pure V and pure Nb or solid solubilized materials shown hydrogen absorbing/desorbing reactivities similar to those of the pure V and Nb materials, as well as solid solubilized BCC alloys such as Ti-Cr based alloys exhibiting the two-stage plateau characteristics or inclined plateau characteristics, alloys suitable to the method described above, as well as a fuel cell using the method and the method of using the same.

### Disclosure of the Invention

The hydrogen absorption and desorption method according to the present invention for solving the subject described above is a method of absorbing and desorbing hydrogen by repeating pressurization and depressurization of hydrogen properly for a body-centered cubic hydrogen storage alloy exhibiting two-stage plateau characteristics or inclined plateau characteristics in which a hydrogen storage alloy temperature in the final stage of a hydrogen desorption process (T2) is controlled to a temperature higher than a hydrogen storage alloy temperature in the hydrogen absorption process (T0) and a hydrogen storage alloy temperature in the initial stage of the hydrogen desorption process (T1) (T2 > T1 ≧ T0). The two-stage plateau characteristic or the inclined plateau characteristics specifically mean that a PCT curve showing equilibrium characteristics of reaction between the hydrogen storage alloy and hydrogen is in contact with three or more parallel lines, or the PCT curve has three or more knick points. The measuring range for the PCT curve referred to herein is a range from a low pressure of 0.1 Pa or less to a high pressure of about 10 MPa.

Further, the hydrogen storage alloy of the invention has two-stage plateau characteristics or inclined plateau characteristics in the PCT curve wherein hydrogen utilizable effectively can be increased by making the low pressure region of the PCT curve instable.

According to the features described above, hydrogen absorbed in the low pressure region of the PCT curve that was neither desorbed nor utilized in the prior art can be desorbed easily and can be taken out as utilizable hydrogen by making the hydrogen storage alloy temperature in the final stage of the desorption process (T2) to a high temperature and, as a result, the amount of hydrogen utilizable in the hydrogen storage alloy can be increased.

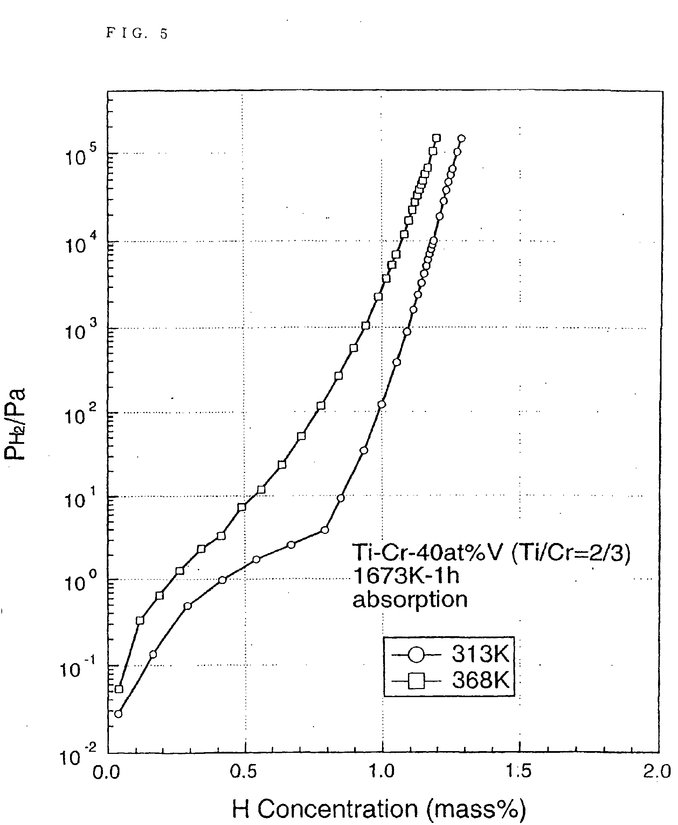

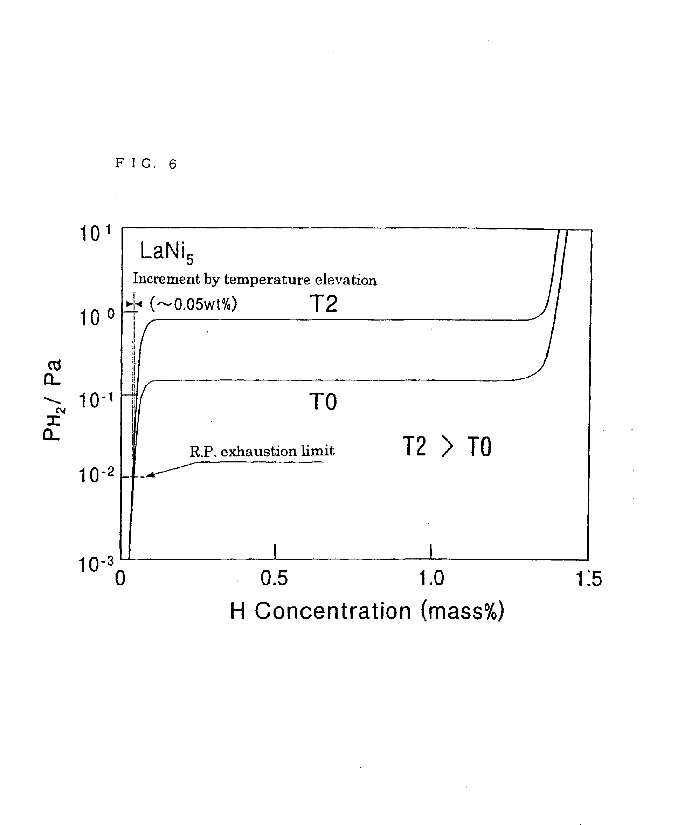

In the Ti-Cr-V alloy of Fig. 1, the plateau stability in the low pressure region varies depending on the addition amount of V. That is, in an alloy having a low pressure plateau or an inclined plateau in a low pressure region of a PCT curve, hydrogen present in the low pressure region of the PCT curve can be made into an effectively utilizable form by changing the composition. A portion of hydrogen in the low pressure region of the PCT curve which is rendered instable can be utilized effectively by making the temperature in the desorption process (T2) higher than the temperature in the hydrogen absorption process (T0) in this state. Fig. 5 shows vacuum PCT curves of specimens obtained by keeping a Ti₂₄Cr₃₆V₄₀ alloy at 1673K for one hour and then rapidly quenching the same in iced water. When comparing a vacuum PCT curve measured at an environmental temperature of 368K with a vacuum PCT curve measured at 313K, it can be seen that the residual amount of hydrogen in the hydrogen storage alloy can be decreased for an identical hydrogen pressure as the dehydrogenation temperature is higher. At 0.01 MPa attainable by evacuation of a rotary pump, the amount of hydrogen can be decreased by 0.12% by weight by dehydrogenation at 368K compared with the case of dehydrogenation at 313K. At a further lower hydrogen pressure, since the effect of instabilizing the plateau becomes remarkable and the amount of hydrogen can be decreased more, more hydrogen can be absorbed in the hydrogen absorption process. In comparison, in a case of an LaNi₅ based alloy having no low pressure plateau, increment of hydrogen by temperature elevation is at most about 0.05 wt% at 0.01 MPa and, at a further lower hydrogen pressure, the amount of effectively utilizable hydrogen is decreased further (Fig. 6).

The hydrogen storage alloy temperature in the initial stage of the desorption process (T1) is made lower than the hydrogen storage alloy temperature in the final stage of the desorption process (T2) (T2 > T1), in order to suppress the cycle deterioration on the effective hydrogen absorbing capacity of the alloy. T1 is sometimes controlled to higher than the hydrogen storage alloy temperature in the absorption process (T0) in order to control the hydrogen desorption rate of the alloy, and the amount of utilizable hydrogen can also be increased in this case by setting as: T2 > T1 in the final desorption process. Temperature elevation conducted only in the initial stage of hydrogen desorption or only temporarily has an effect of increasing the hydrogen desorbing rate but the amount of effectively utilizable hydrogen is not increased. For increasing the amount of effectively utilizable hydrogen, it is effective to elevate the temperature in the final stage of the hydrogen desorption process. The final stage of the hydrogen desorption process is at or after any instance where the residual amount of hydrogen in the hydrogen storage alloy is reduced to 50% or less, more preferably, 25% or less, and temperature elevation in the final stage of the process is effective for the suppression of the cycle deterioration.

Since it is more practical as the hydrogen absorbing alloy temperature in the hydrogen desorption process T1 is nearer to the room temperature, it is preferred that T1 ≦ 373K.

The hydrogen storage alloys suitable to applications of the hydrogen absorption and desorption method of the invention and capable of obtaining a large amount of effective hydrogen absorption capacity are body-centered cubic alloys represented by the general formula: Ti_{X}Cr_{Y}M_{Z} in which M is one or more members selected from elements belonging to the groups IIa, IIIa, IVa, Va, VIa, VIIa, VIII, IIIb, IVb of the periodical table, in 20 ≦ X+Y ≦ 100 atomic%, 0.5 ≦ Y/X ≦ 2 and 0 < ≦ 80 atomic%, and including inevitably intruded oxygen or nitrogen and inevitably forming minimum spinodal decomposition phase. Addition of one or more members selected from the elements belonging to the groups IIa, IIIa, IVa, Va, VIa, VIIa, VIII, IIIb, IVb of the periodical table to a Ti-Cr binary alloy gives an effect of not only stabilizing the body-centered cubic structure but also of instabilizing the PCT curve low pressure area. In this alloy, the Cr/Ti ratio is defined as 0.5 ≦ Y/X ≦ 2, because the plateau pressure is greatly deviated from a normal pressure if the rate is out of the range described above, which is not practical. Particularly, since oxygen deteriorates the effective absorption amount of hydrogen, it is preferably as less as possible. Further, since the effective absorption amount of hydrogen is decreased when the spinodal decomposition phase is formed, lowering of the absorption amount can be suppressed by not applying a heat treatment that tends to cause spinodal decomposition or shortening the treating time.

When the alloy is set as a body-centered cubic hydrogen storage alloy comprising V at 60 atomic% or less, and/or Mo, Al, Mn and/or rare earth elements at 10 atomic% or less for the constituent M, 2.5% by weight or more effective absorption amounts of hydrogen can be obtained in method determined original point on evaccuation, and the hydrogen absorption and desorption method of the invention can be utilized more efficiently.
On the other hand, according to the measurement by method determined original point on evaccuation, the effective absorption amount of hydrogen in the prior art alloys remains at about 2% by weight. While BCC mono-phase can be formed within a compositional V range from 5 to 100 atomic%, since the stability of VH_{0.8} formed as a hydride product of pure V is remarkably lowered by lowering the amount of admixed V to 60% or less, effective utilization of hydrogen in the PCT curve low pressure region is facilitated. Further, since V is an expensive element as well, an excess amount of admixed V over 60 atomic% will lead to difficulty in practical use.

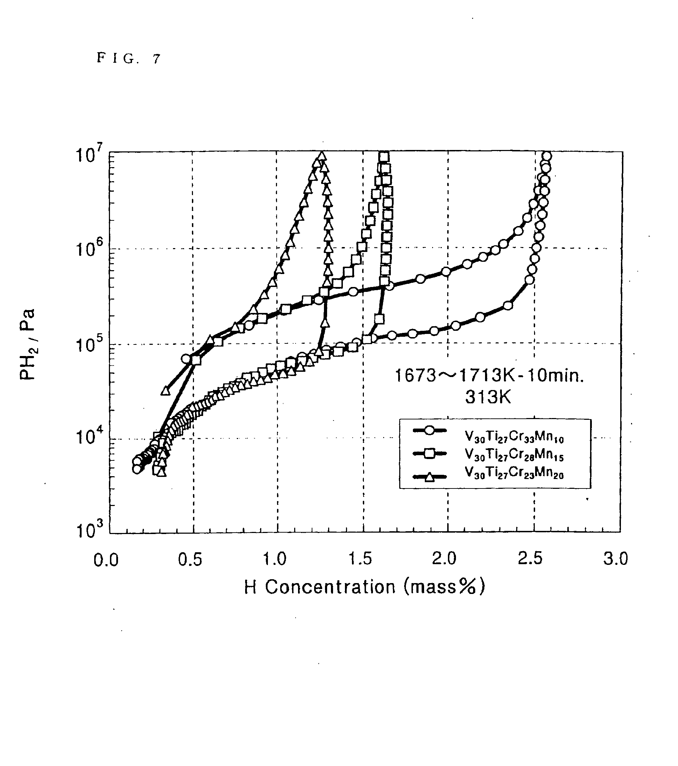

Among the additive elements described above, Mo, Al, and Mn serve stabilizers for the BCC phase by the addition of a small amount and have an effect of suppressing the formation of a Laves phase that deteriorates the absorption amount of hydrogen, thereby increasing the effective absorption amount of hydrogen. When the addition amount of Mo, Al, Mn, and rare earth elements exceeds 10%, the hydrogen absorption amount is decreased remarkably, so that the elements are preferably contained at 10% or less. Fig. 7 shows high pressure PCT curves of Ti₂₇Cr_{43-X}Mn_{X}V₃₀ (in which X = 10, 15, 20 atomic%) BCC alloy measured at 40°C by method determined original point on evaccuation. As shown in the graph, when the Mn addition amount is 10 atomic%, the effective hydrogen absorption amount shows a satisfactory value as 2.6% by weight but as the Mn addition amount is increased to 15% and 20%, the effective absorption amount of hydrogen lowers remarkably to a value less than 2% by weight. The effective absorption amount of hydrogen of the alloy in which the addition amount of V is changed to 20 atomic% and controlled to show a plateau near the normal pressure is substantially equal with a case where the addition amount of V is 30 atomic% and it is considered that the effective absorption amount of hydrogen depends on the addition amount of Mn. The trend is identical also for Mo, Al and rare earth elements. In a case of utilizing starting materials at a low purity, since the rare earth elements act as a getter for oxygen or the like intruded as impurities, addition of the rare earth elements by a small amount is also effective for suppressing deterioration by oxygen and maintaining high characteristics.

On the other hand, the fuel cell according to the present invention has a feature comprising a hydrogen storage tank incorporating a hydrogen storage alloy having two-stage plateau characteristics or inclined plateau characteristics, a temperature control device for elevating or cooling the temperature of the hydrogen storage alloy directly or the atmospheric temperature of the absorption alloy, a fuel cell capable of outputting electric power via chemical change of hydrogen supplied from the hydrogen storage tank and a control section for controlling such that a hydrogen absorption alloy temperature in the final stage of hydrogen desorption process (T2) is made to a temperature higher than a hydrogen storage alloy temperature in a hydrogen absorption process (T0) and a hydrogen storage alloy temperature in the initial stage of the hydrogen desorption process (T1) (T2 > T1 ≧ T0). According to the feature, since the temperature of the hydrogen storage alloy in the final stage of the hydrogen desorption process (T2) is made higher than the temperature in the hydrogen absorption process (T0), hydrogen absorbed in the PCT curve low pressure region which was neither desorbed from the hydrogen storage alloy nor utilized in the prior art can be taken out as a utilizable hydrogen and the electric power obtained from the fuel cell can be increased. Further, since the temperature T2 is made higher than the hydrogen storage alloy temperature in the initial stage of the hydrogen desorption process (T1) the life of the fuel cell can be increased.

In the fuel cell according to the invention, it is preferred that the control section can properly control the pressure, temperature and flow rate of the hydrogen gas supplied to the hydrogen storage tank and the fuel cell. With the constitution described above, by controlling the pressure, the temperature and the flow rate of the hydrogen gas, the amount of electric power generation in the fuel cell can be properly controlled depending on the load and the utilization efficiency of hydrogen used in the fuel cell can be improved.

In the fuel cell according to the invention, it is preferred that the temperature control device described above can utilize the heat dissipated from the fuel cell or the heat of exhaust gases exhausted from the fuel cell for the temperature elevation. With the constitution described above, since the dissipated heat or discharged heat from the fuel cell can be utilized for the temperature elevation of the hydrogen storage alloy, electric power, etc. are no more required for the temperature elevation of the hydrogen storage alloy, which can improve the efficiency in the overall hydrogen fuel cell.

### Brief Description of the Drawings

Fig. 1 is vacuum PCT curves for a Ti-Cr-V_{X} (Ti/Cr = 2/3, X = 20 - 100) alloy.
Fig. 2 is high pressure PCT curves for a Ti-Cr-Vx (Ti/Cr = 2/3, X = 20 - 100) alloy.
Fig. 3 is a PCT curve of a Ti₄₀Cr₅₈Mo₂ alloy and four parallel lines and knick points.
Fig. 4 is an XRD chart for a Ti₄₀Cr₅₈Mo₂ alloy.
Fig. 5 is vacuum PCT curves for a specimen of a Ti₂₄Cr₃₆V₄₀ alloy after keeping at 1673K for 1 hour and quenching in iced water.
Fig. 6 is PCT curves for an LaNi₅ alloy.
Fig. 7 is high pressure PCT curves for a Ti₂₇Cr_{43-X}Mn_{X}V₃₀ (X = 10, 15, 20 atomic%) BCC alloy measured by method determined original point on evaccuation.
Fig. 8 is an XRD charts for a Ti₃₉Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy.
Fig. 9 is vacuum PCT graphs for a Ti₃₉Cr_{57.5}Mo_{2.5}La₁ alloy.
Fig. 10 is high pressure PCT graphs for a Ti_{39.5}Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy.
Fig. 11 shows dependence of the hydrogen absorption amount of a Ti₃₉Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy on the number of cycle tests.
Fig. 12 is a system flow chart showing an embodiment of a fuel cell according to the invention.
Fig. 13 is a model view showing a mechanism of forming electric power in a fuel cell used for the fuel cell according to the invention.

### Best Mode for Practicing the Invention

Embodiments of the present invention are to be described with reference to the drawings.

### (Example 1)

This example shows possibility for excellent absorption amount and effective suppression of cycle deterioration, by using a body-centered cubic hydrogen storage alloy having an inclined plateau in a PCT curve low pressure region and controlling a hydrogen storage alloy temperature in the final stage of a hydrogen desorption process (T2) to a temperature higher than a hydrogen storage alloy temperature in the hydrogen absorption process (T0) and a hydrogen storage alloy temperature in the initial stage of the hydrogen desorption process (T1) (T2 > T1 ≧ T0).

After weighing commercially available starting materials, the mixtures were subjected to arc melting in argon with a water cooled copper hearth to prepare a Ti₃₉Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy each by 25 g. After coarsely pulverizing the alloys with a stamp mill, they were kept at 1723K for 10 min and then quenched in iced water. The phase appearing in the quenched alloy specimens were identified by an X-ray diffraction apparatus manufactured by Shimazu, Japan. High pressure PCT characteristics and vacuum PCT characteristics were measured by using PCT characteristic measuring apparatus manufactured by Suzuki Shokan. A cycle test was conducted also by the PCT characteristic measuring apparatus.

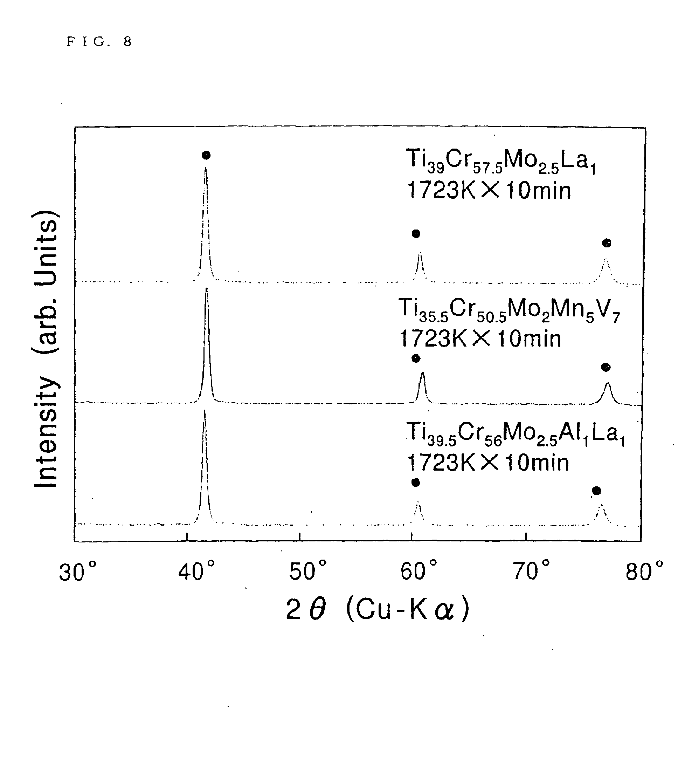

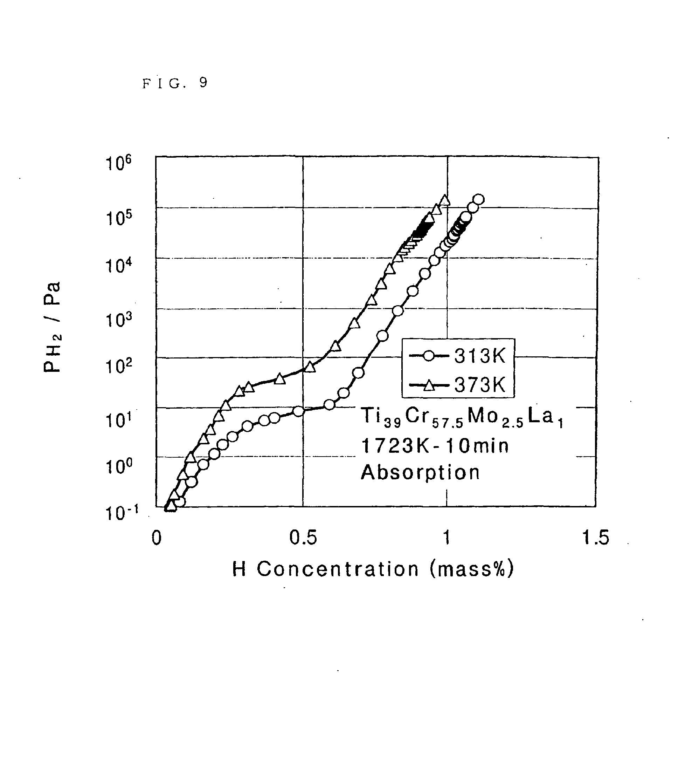

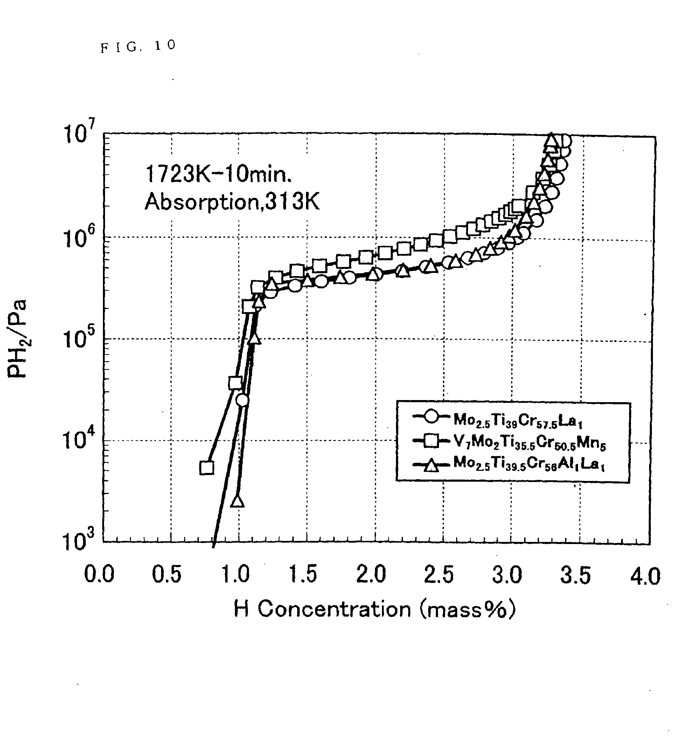

Fig. 8 shows XRD charts for specimens after quenched in iced water. All the prepared specimens had BCC mono-phase. Fig. 9 shows vacuum PCT characteristics of a Ti₃₉Cr_{57.5}Mo_{2.5}La₁ alloy. When the temperature was elevated from 40°C to 100°C, instabilization of the inclined plateau in the low pressure region was confirmed. Fig. 10 shows high pressure PCT characteristics before the cycle test of the Ti_{39.5}Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy. Presence of the phase stabilized at low pressure is confirmed by Fig. 9. In view of the drawings, it can be easily confirmed that the PCT curve is in contact with three or more parallel lines and has three or more knick points. Table 1 shows the dependence on the dehydrogenation temperature of the hydrogen absorption amount by method determined original point on evaccuation of the Ti₃₉Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy.

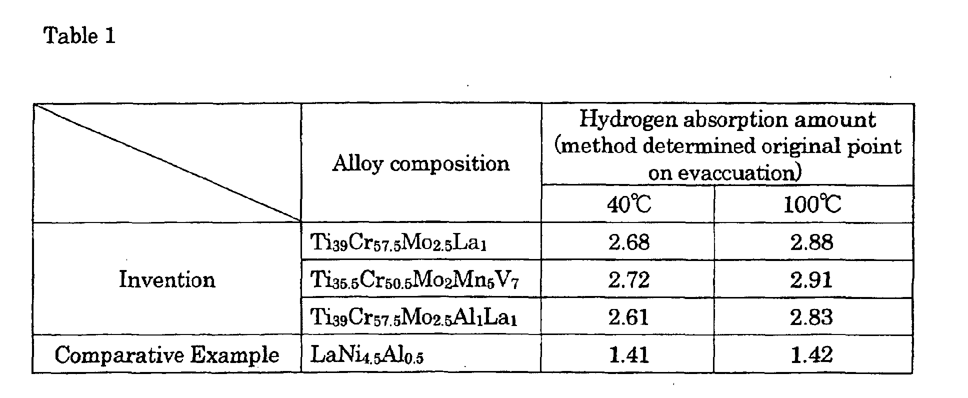

As described above, BCC type hydrogen storage alloys show large effective absorption amount of hydrogen and the absorption amount can be increased further by desorption at higher temperature. Compared with comparative example LaNi₅, it can be seen that the effect of utilizing the temperature difference of the alloy according to the invention is remarkably large.

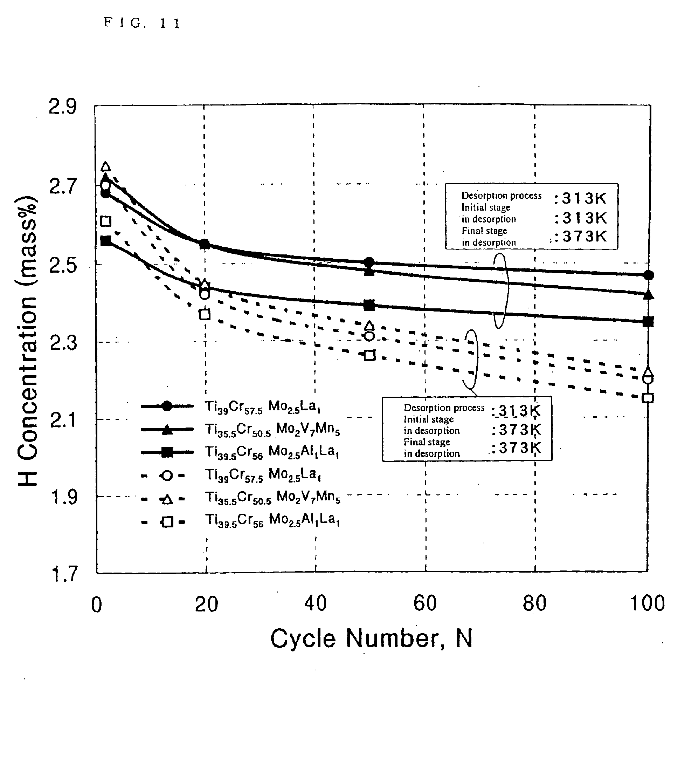

Then, a cycle test was conducted on the alloys by using a high pressure PCT characteristic evaluation apparatus. The hydrogen absorption process was set at 40°C in all of the cases. In the comparative example, desorption was conducted at 100°C throughout the process of desorption and only the final stage of the desorption process was set at 100°C in the invention. Fig. 11 is a graph showing relation between the number of the cycle test and the absorption amount of hydrogen for a Ti₃₉Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy. It can be seen that the result shown by solid lines in which the temperature was elevated to 100°C only in the final stage of the desorption process shows more excellent cycle characteristics over that by broken lines where temperature was set to 100°C throughout the period of desorption. Further, Table 2 shows relation between the desorption temperature control and cycle deterioration for a Ti₃₉Cr_{57.5}Mo_{2.5}La₁ alloy, a Ti_{39.5}Cr₅₆Mo_{2.5}Al₁La₁ alloy and a Ti_{35.5}Cr_{50.5}Mo₂Mn₅V₇ alloy.

**Table 2**

| Alloy composition (atomic%) | Hydrogen absorption amount after 100 cycles | |
|---|---|---|
| | 100°C throughout desorption (Comp. Example) | 100°C in the final stage of desorption (Invention) |
| Ti₃₉Cr_{57.5}Mo_{2.5}La₁ | 81.5% | 92.2% |
| Ti_{35.5}Cr_{50.5}Mo₂Mn₅V₇ | 80.7% | 89.0% |
| Ti₃₉Cr_{57.5}Mo_{2.5}Al₁La₁ | 82.4% | 91.8% |
| | (initial value of hydrogen absorption amount: 100%) | |

As described above, cycle deterioration can be suppressed by controlling the temperature in the final stage of the desorption process is higher than that in the initial stage of the desorption process. Accordingly, it can be seen that large effective absorption amount of hydrogen can be attained and cycle deterioration can be suppressed by effectively utilizing hydrogen in the PCT curve low pressure region using the invention.

### (Example 2)

This example shows a constitutional view of a fuel cell having a feature comprising hydrogen storage tank incorporating a hydrogen storage alloy, a temperature control device for elevating or cooling the temperature of the hydrogen storage alloy directly or the atmospheric temperature of the absorption alloy, a fuel cell capable of outputting electric power by chemical change of hydrogen supplied from the hydrogen storage tank and a control section for controlling such that a hydrogen absorption alloy temperature in the final stage of hydrogen desorption process (T2) is made to a temperature higher than a hydrogen storage alloy temperature in a hydrogen absorption process (T0) and a hydrogen storage alloy temperature in the initial stage of the hydrogen desorption process (T1) (T2 > T1 ≧ T0), and a method of increasing the amount of electric power obtained by the fuel cell and suppressing cycle deterioration.

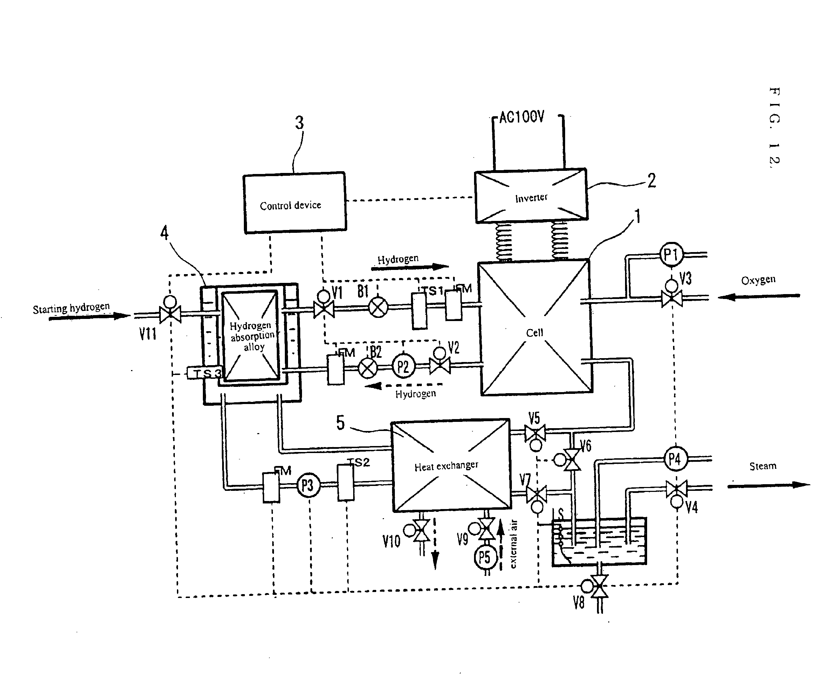

Fig. 12 shows a system flow chart showing an embodiment of a fuel cell according to the present invention. A hydrogen fuel tank 4 is a tank for supplying hydrogen to a fuel cell to be described later and the tank is incorporated with a body-centered cubic hydrogen storage alloy having two-stage plateau characteristics or inclined plateau characteristics. The tank is provided with a solenoid valve V11 for introducing starting hydrogen, as well as a solenoid valve V1 for supplying hydrogen to the fuel cell and a solenoid valve V2 for recovering the hydrogen returned from the fuel cell to the tank disposed between the tank and the fuel cell 1, and they are adapted to supply hydrogen by a pump P2. Further, pressure valves B1 and B2 and flow meters FM are provided in the course of the pipeline for controlling the pressure and the flow rate of hydrogen, and the entire system is controlled, including temperature by the control device 3. A heat exchanger 5 controlled by the control device is utilized for temperature elevation and temperature lowering of a hydrogen storage alloy. In the heat exchanger 5, heat exchange is conducted between exhausted heat possessed in steams at a relatively high temperature exhausted from the fuel cell 1 and cold water as a cold temperature medium and temperature sensors TS1 - TS3 or the flow meters FM and the pumps are controlled to control the temperature to an aimed level. From the fuel cell 1, a DC power can be obtained by reaction between oxygen and hydrogen and an inverter 2 for converting the DC power into a predetermined AC power is connected with the fuel cell. In an application use for supplying electric power to electronic equipments, a DC/DC converter may be connected instead of the inverter 2. LS in the drawing is a water level sensor in an accumulation tank for accumulating water formed when steams exhausted from the fuel cell are cooled by the heat exchanger 5.

Then, the operation of the fuel cell of the invention is to be described. At first, when a hydrogen reservoir at a high pressure is connected with a hydrogen supply port of the tank 4 and the solenoid valve V11 is opened, the hydrogen fuel supplied into the tank and hydrogen is absorbed from the low pressure region up to the high pressure region shown by the PCT curve for the hydrogen storage alloy incorporated in the tank. In this case, the pump 5 is operated to send external air into the heat exchanger and a circulation pump 3 is controlled properly such that the temperature of the tank (T0) is 40°C or lower. When the absorption is completed, the solenoid valve V11 is closed.

When the fuel cell is operated, signals from various kinds of sensors are received by the control device 3, opening/closure of the solenoid valves V1 and V2 and the pressure valves B1 and B2 are controlled to supply hydrogen to the fuel cell 1. In this step, control for supplying heat from the heat exchanger 5 is also conducted for controlling the rate of supplying hydrogen. In the invention, the alloy temperature in the final stage of hydrogen desorption process (T2) is controlled to higher than the alloy temperature in the initial stage of the hydrogen desorption process (T1), to effectively utilize hydrogen absorbed in the hydrogen storage alloy, particularly, hydrogen in the PCT curve low pressure region.

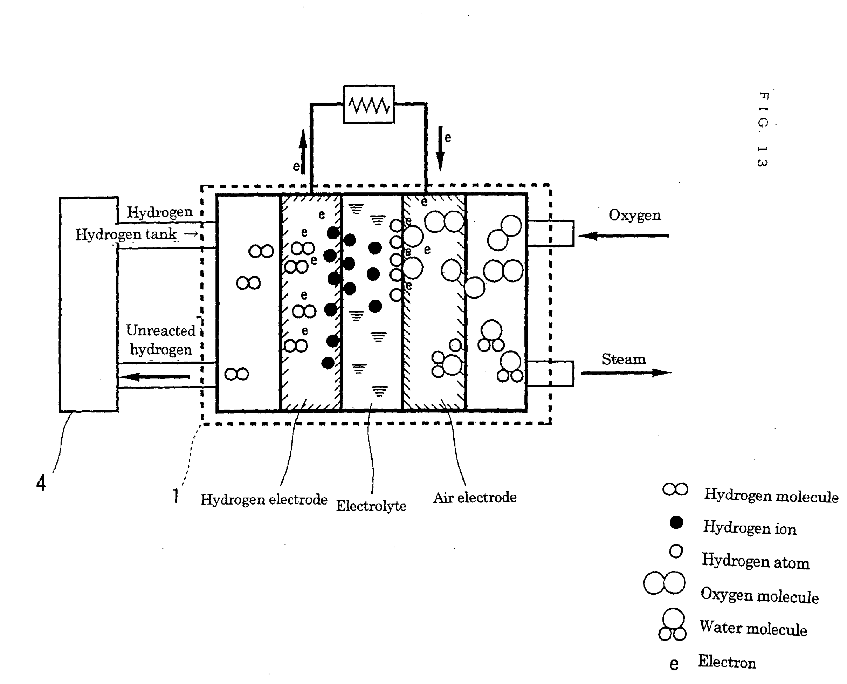

Hydrogen is thus supplied to the fuel cell 1 and, at the same time, oxygen is supplied from the oxygen electrode in which oxygen and hydrogen are reacted to obtain electric power in the fuel cell. As shown in Fig. 13, the reaction provide electric power by using a reaction opposite to that formed by hydrogen and oxygen through electrolysis of water when a DC current is applied to a water incorporated with an electrolyte. Hydrogen molecules supplied from the hydrogen fuel tank 4 release electrons at the hydrogen electrode to form hydrogen ions and the electrons are transferred toward the anode to obtain electric power.

The hydrogen ions transfer through the electrolyte toward the anode, accept electrons at the anode and return to hydrogen atoms, which react with oxygen to form water (steams), and exhaust gases containing steams at a relatively high temperature (about 70 to 90°C) are formed by the heat of reaction. By controlling the exhaust gases to flow into the heat exchange by way of the valve, they can utilized as a heat source for heating.

Upon starting of power generation, since hydrogen supplied from the hydrogen reservoir is hydrogen in the high pressure plateau region of the hydrogen storage alloy, and it is easily released, it can be utilized being controlled to a temperature near the hydrogen absorption temperature (T0). When the desorption of hydrogen continues and the hydrogen desorption from the high pressure plateau region of the hydrogen absorption alloy decreases, cold water elevated for the temperature by way of the heat exchanger 5 is supplied to the tank to start heating for the hydrogen storage alloy. Hydrogen absorbed in the PCT curve low pressure region can now be utilized effectively by the heating to greatly improve the power generation capacity of the fuel cell.

Electric power obtained could be increased by about 14% compared with the case of desorption at a temperature constant at 20°C by using the Ti₃₉Cr₅₇Mo₃La₁ alloy for the hydrogen absorption tank, absorbing hydrogen at 20°C and desorbing the same at 85°C in the final stage of desorption process. Further, the life of the tank at which the absorption amount of hydrogen was reduced to 90% of the initial value was extended by about 30% compared with a case of keeping the hydrogen storage alloy temperature in the desorption process (T2) constant at 85°C from the initial stage.

In this example, the upper limit for T2 was defined at 90°C since water was used as cold temperature medium but the invention is not limited only thereto and heating by a heater can also be utilized. In the same manner, it is also possible to utilize a coolant other than water for cooling or utilize the method of enabling both cooling and heating, for example, by a Peltier device.

## Claims

1. A hydrogen absorption and desorption method for a hydrogen storage alloy which comprises steps of absorbing and desorbing hydrogen by properly repeating hydrogen pressurization and depressurization to said hydrogen storage alloy being a body-centered cubic hydrogen storage alloy having two-stage plateau characteristics or inclined plateau characteristics wherein a hydrogen storage alloy temperature in the final stage of hydrogen desorption process (T2) is controlled to a temperature higher than a hydrogen storage alloy temperature in a hydrogen absorption process (T0) and a hydrogen storage alloy temperature in the initial stage of the hydrogen desorption process (T1) (T2 > T1 ≧ T0).

2. The hydrogen absorption and desorption method according to claim 1, wherein the hydrogen storage alloy temperature in the final stage of the hydrogen desorption process (T2) is 150°C or lower.

3. The hydrogen absorption and desorption method according to claim 1 or 2, wherein the process at or after the instance where hydrogen in the hydrogen storage alloy is decreased to any residual amount of 50% or less in the hydrogen desorption process is defined as the final stage for the hydrogen desorption process.

4. The hydrogen absorption and desorption method according to any of claims 1 to 3, wherein the process at or after the instance where hydrogen in the hydrogen storage alloy is decreased to any residual amount of 25% or less in the hydrogen desorption process is defined as the final stage for the hydrogen desorption process.

5. A body-centered cubic hydrogen storage alloy for conducting absorption and desorption of hydrogen in the reaction between the hydrogen storage alloy and hydrogen in which a hydrogen storage alloy temperature in the final stage of a hydrogen desorption process (T2) is controlled to a temperature higher than a hydrogen storage alloy temperature in the hydrogen absorption process (T0) and higher than a hydrogen storage alloy temperature in the initial stage of hydrogen desorption (T1) (T2 > T1 ≧ T0) wherein the hydrogen storage alloy has two-stage plateau characteristics or inclined plateau characteristics.

6. The hydrogen storage alloy according to claim 5 wherein said hydrogen storage alloy has a composition represented by the general formula: Ti_{X}Cr_{Y}M_{Z} in which M is one or more members selected from elements belonging to the groups IIa, IIIa, IVa, Va, VIa, VIIa, VIII, IIIb, and IVb of the periodical table, 20 ≦ X+Y < 100 atomic%, 0.5 ≦ Y/X ≦ 2, 0 < Z ≦ 80 atomic%, and includes inevitably intruded oxygen or nitrogen and minimum spinodal decomposition phase formed inevitably.

7. The hydrogen storage alloy according to claim 6, wherein the additive element M is V at 60 atomic% or less.

8. The hydrogen storage alloy according to claim 6 or 7, wherein the additive element M is one or more members selected from Mo, Al, Mn and rare earth elements at 10 atomic% or less.

9. A fuel cell comprising a hydrogen storage tank incorporating a hydrogen storage alloy, a temperature control device for elevating or cooling a temperature directly of the hydrogen storage alloy or an atmospheric temperature of the absorption alloy, a fuel cell capable of outputting electric power by chemical change of hydrogen supplied from the hydrogen storage tank, and a control section for conducting control that a hydrogen storage alloy temperature in the final stage of a hydrogen desorption process (T2) is at a temperature higher than a hydrogen storage alloy temperature in a hydrogen absorption process (T0) and a hydrogen storage alloy temperature in the initial stage of the hydrogen desorption process (T1) (T2 > T1 ≧ T0).

10. The fuel cell according to claim 9, wherein the control section is adapted to properly control the pressure, temperature and flow rate of the hydrogen gas supplied to the hydrogen storage tank and the fuel cell.

11. The fuel cell according to claim 9 or 10, wherein the temperature control device can utilize a heat dissipated from the fuel cell or a heat of exhaust gases exhausted from the fuel cell for the temperature elevation.
